Europäisches Patentamt

**European Patent Office**

**Office européen des brevets**

(19)

(11) Publication number: **0 106 043**
A2

(12)

# EUROPEAN PATENT APPLICATION

(21) Application number: **83107579.1**

(22) Date of filing: **01.08.83**

(51) Int. Cl.³: **C 02 F 3/30**

(30) Priority: **14.08.82 JP 141536/82**
**14.09.82 JP 160609/82**

(43) Date of publication of application: **25.04.84**
**Bulletin 84/17**

(84) Designated Contracting States: **CH DE FR GB LI NL**

(71) Applicant: **Uchimizu, Mamoru, 11-20,**
**Nishiwaseda 2-chome Shinjuku-ku, Tokyo (JP)**

(72) Inventor: **Uchimizu, Mamoru, 11-20,**
**Nishiwaseda 2-chome Shinjuku-ku, Tokyo (JP)**

(74) Representative: **Patentanwälte TER MEER - MÜLLER -**
**STEINMEISTER, Triftstrasse 4, D-8000 München 22 (DE)**

(54) **Process and aeration tank system for biologically treating sewage.**

(57) A sewage disposal for biologically treating the same, comprises aerating one portion of the incoming sewage under a relatively strong aeration condition and another portion thereof under a relatively weak aeration condition, so as to produce a relatively aerobic sludge in the first-mentioned portion of the sewage and a relatively anaerobic sludge in the second-mentioned portion thereof, and admixing the two different types of sludges to produce a secondary sludge for collection or removal.

EP 0 106 043 A2

ACTORUM AG

0106043

## DESCRIPTION

The present invention relates to a process for biologically treating waste water or merely sewage and an aeration tank system for carrying out this process. More particularly, the invention relates to the biological treatment of sewage particularly containing organic matter by making use of biological reactions occuring in the treated sewage. The waste water or sewage includes human or animal urine, fishery, agricultural and industrial wastes, which are rich in organic matter.

Among the conventional sewage disposals an activated-sludge method is known and widely used. The common practice is to store an incoming sewage in an adjusting tank, in which, when necessary, the sewage is homogenized, a suitable nutrient is added and/or the pH value thereof is adjusted. Then a certain quantity of sewage is introduced into an aeration tank in which it is exposed to the air supplied from a blower or an air compressor. The aeration activates the aerobes present in the treating sewage so that the organic matter is oxidized to produce an activated sludge. The sewage containing the activated sludge is then supplied into a settling tank in which the activated sludge is allowed to settle out as a supernatant liquid and a precipitate. The supernatant liquid is discharged as a treated sewage while the precipitate is partially returned to the aeration tank by means of a pump so as to keep the sludge concentration in the aeration tank at a required value, which is essential for the aerobes to live therein. The remaining portion of the sewage containing the activated sludge is taken out of the system as a surplus, which is dehydrated by means of a dehydrator to produce a sludge cake. The sludge cake is used for dumping into excavations or thrown away.

Under this conventional activated-sludge method, however, if the incoming sewage has a highly concentrated pollution content, the expected decomposition by oxidization caused by the aerobic material will be difficult to achieve. This is likely to result in insufficient purification of sewage. In such cases, it will be essential to dilute the sewage to be treated with water beforehand so as to lower the concentration of the pollution content to an allowable extent. The addition of the diluting water increases the volume of the sewage to be treated, which necessarily requires a large-scaled tank or tanks and equipment accessory thereto. All this increases the costs required for sewage disposal. For example, as the volume of the sewage to be treated increases, the aeration power (electricity) will accordingly increase, which results in an increased electricity cost. If the sewage disposal becomes too expensive, it is likely to be incomplete or disregarded purely for economical reason. This is a serious problem to public health and welfare.

The present invention is directed toward solving the problems pointed out above with respect to the conventional activated-sludge methods, and has for its object to provide an improved method of treating sewage and an improved aeration tank for carrying out sewage disposal without or with little diluting water irrespective of the concentration of pollution content present in the sewage, thereby eliminating the necessity of providing large-scaled equipment for handling the diluting water, and also simplifying the operational procedure.

Another object of the present invention is to provide an inproved sewage disposal capable of operating in an economical and accessible manner.

According to the present invention, the biological treatment of sewage comprises aerating one portion of the incoming sewage under a relatively strong aeration condition, and another portion thereof under a relatively weak aeration condition, thereby producing an aerobic sludge and an anaerobic sludge, and admixing the sludges of different nature to produce a secondary sludge through coagulation therebetween, thereby purifying the sewage.

According to one advantageous aspect of the present invention, the sewage is treated in a single aeration tank which includes a first aeration section and a second aeration section, the first aeration section being adapted to carry out said relatively weak aeration whereby the average dissolved oxygen of the sewage is reduced to o,3 ppm or less, and the second aeration section being adapted to carry out said relatively strong aeration whereby the average dissolved oxygen of the sewage therein is kept at least 0,1 ppm higher than that of the sewage in the first aeration section, and means whereby the sewage from the first aeration section and the second aeration section is circulated together during which it is admixed so as to produce said secondary sludge for collection or removal.

According to another advantageous aspect of the present invention, the aeration tank additionally includes a partition provided between the first and the second aeration sections, the partition including a passageway allowing the sewage in both sections to pass through.

Other objects, features and advantages of the present invention will become more apparent from the following description when taken in connection with the accompanying drawings, which show, for the purpose of illustration only, examples of the sewage treating system constructed in accordance with the present invention.

Fig. 1        is a flowchart showing a prior art activated-sludge method;

Fig. 2          is a schematic view showing one example
                adapted for use in the method of
                fig. 1;

Fig. 3 to 7     are schematic views exemplifying
                a first embodiment according to
                the present invention;

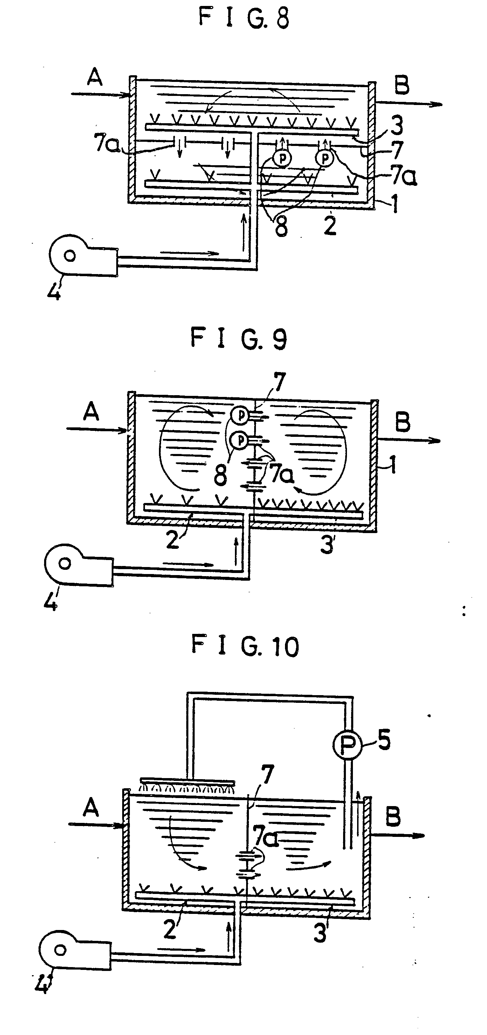

Fig. 8 to 12    are schematic views exemplifying
                a second embodiment;

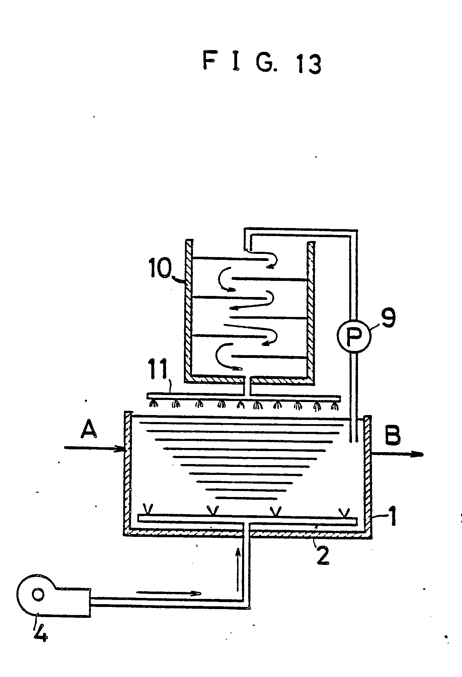

Fig. 13         is  a schematic view showing a modification of the first embodiment
                shown in fig. 3 to 7;

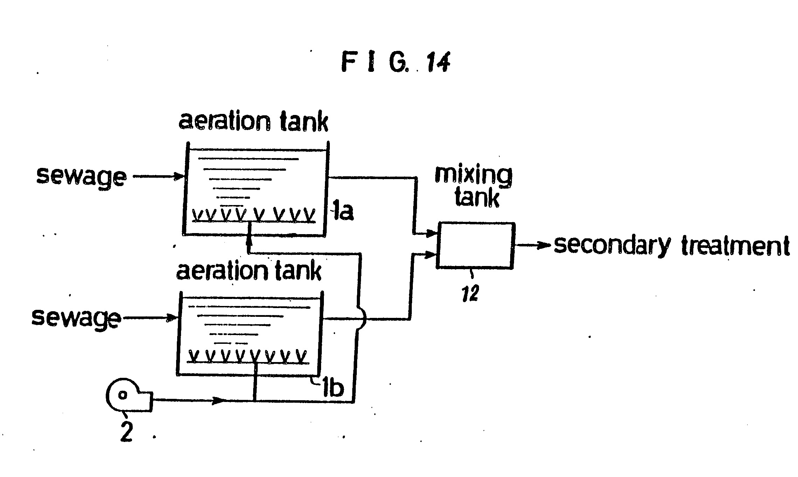

Fig. 14         is a flowchart showing an example
                of another embodiment according to
                the present invention.

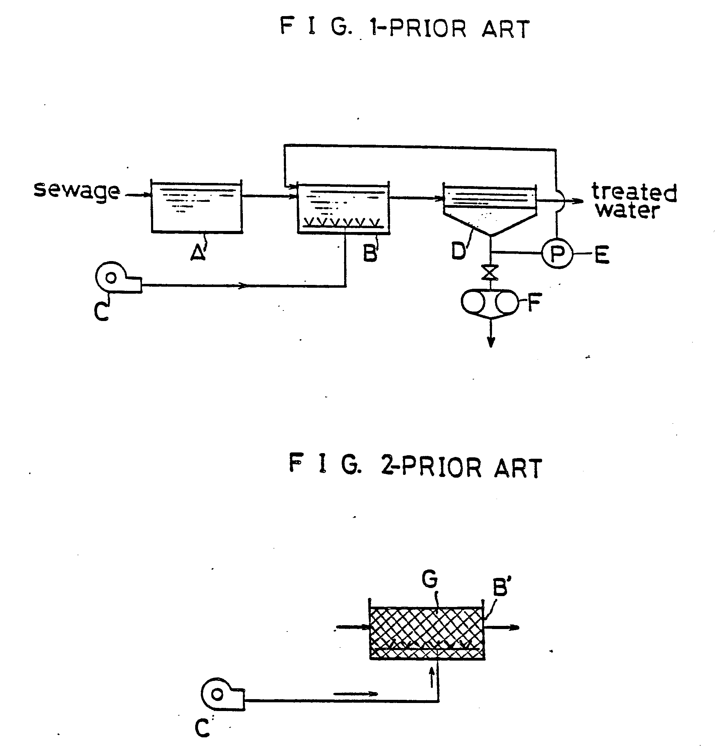

In order to explain the background of the present invention, reference will be more particularly made to the
sewage disposal known in the art, shown in figure 1. This
known process in commonly called an activated-sludge
method. According to this method, an incoming sewage is
stored in an adjusting tank (A) in which, when necessary,
the sewage is homogenized, a suitable nutrient is added
and/or the pH value thereof is adjusted. A desired
quantity of sewage is then introduced to an aeration tank
(B) in which the sewage is exposed to the air supplied
from a blower (C). Owing to the aeration, the aerobes
present in the sewage are activated to oxidize the organic
matter contained in the sewage, thereby producing an
activated sludge. The sewage containing the activated
sludge is supplied to a settling tank (D) in which the
sewage is allowed to settle out as a supernatant liquid
and a precipitate. The supernatant liquid is discharged
as treated water, while the precipitate is partially returned to the aeration tank (B) by means of a pump (E) so as to keep the sludge concentration at a required value, which is essential for the aerobes therein to be alive and behave effectively. The remaining portion of activated sludge is taken out of the process line as a surplus. It is dehydrated by means of a dehydrator (F) to obtain a sludge cake which is used for dumping into the excavations or for any other civil engineering process. Alternatively, the sludge cake is wasted.

As pointed out above, this prior art system is disadvantageous in that a diluting water must be prepared to dilute the incoming sewage if it has a high percentage of pollution matter. Otherwise, the expected decomposition by oxidization caused by the activity of the aerobic bacteria would be difficult or impossible to achieve.

Another disadvantage of the prior art system is derived from the corresponding aeration method. Referring to fig. 1, the air from the blower (C) located below the tank (B) is blown into the tank, wherein attention is concentrated on how to maintain an optimum condition at which the aerobic bacteria present in the sewage are cultured with an adequate DO (dissolved oxygen) thereof. As a result, the DO in the tank is equally maintained. However, this condition is suitable only for the aerobic bacteria to live. Fig. 2 shows a slightly modified aeration tank (B') which is provided with a fixed floor or porous structure, such as of net. The porous floor is effective to allow an activated sludge to be stuck thereto. In this case, an utmost care is also taken how to maintain an optimum condition at which the aerobic bacteria are cultured with an adequate DO of the sewage.

Now, referring to fig. 3 to 14, the treatment of the sewage according to the present invention will be described.

The sewage to be treated under the present invention includes waste water containing organic matter, such as fishery or agriculture wastes, human or animal urine. To carry out the present invention, the sewage is classified into two types with respect to the concentration of pollution content present therein. For example, a waste water which was used to boil mackerel or sardine, and a waste water from a domestic source; untreated urine and town sewage or diluted urine; sewage containing organic matter and a biologically treated sewage. In these relationships, one has a more condensed pollution content while the other has a less condensed one.

To aerate the sewage of such nature under different aeration conditions, there are two ways; one is to use a single aeration tank in which the sewage is aerated in different sections and the other is to use two aeration tanks having different aeration conditions. The former method is suitable for treating one kind of sewage, that is, a sewage from the same source. The latter method is suitable for treating different kinds of sewage, that is sewages from different sources, wherein they contain organic matter and identical or similar pollution content.

Referring to fig. 3, an aeration tank 1 according to a first embodiment of the invention includes a first aeration section 2 wherein a relatively weak aeration is carried out, thereby reducing the DO of the sewage present therein to 0,3 ppm or less, and a second aeration section 3 wherein a relatively strong aeration is carried out, thereby increasing the DO of the sewage therein to an at least 0,1 ppm higher level than that of the sewage aerated in the first section 2. As shown in fig. 3, the first aeration section 2 is located near the bottom floor of the tank 1, while the second aeration section 3 is located in the center of the tank 1. The aertion sections 2 and 3 are provided with air-blowing pipes 2a and 3a, respectively, which are supplied with air by means of one blower 4. The air pressure is differentiated between the first aeration section 2 and the second aeration section 3 either by adjusting the air pressure supplied to each section 2,3 or by adjusting the number of the air blowing pipes 2a,3a or of the air-blowing pores formed in each pipe.

The aeration tank 1 includes a device whereby the sewage in the tank 1 is circulated during which it is admixed. The circulating device can be provided by a pump (not shown) or it can be arranged to utilize the pressure difference occuring in the tank 1.

In the system illustrated in fig. 3 the sewage is introduced into the tank 1 in the direction indicated by the arrow (A), and is aerated near the bottom in the first section 2 whereby the DO thereof is reduced to 0,3 ppm or less, and in the upper section, it is aerated at a relatively strong air pressure provided by the second air-blowing pipe 3a, thereby keeping an at least 0,1 ppm higher level of DO than that of the sewage present near the bottom. The sewage in the upper section and the lower section is circulated as shown by the arrows in fig. 3, thereby producing a secondary sludge which is discharged in the direction indicated by the arrow (B).

In the upper section the bacteria of relatively aerobic nature are activated under the strong aeration, while in the lower section the bacteria of the relatively anaerobic nature are activated. In this way, an aerobic sludge is produced in the upper section, and an anaerobic sludge is produced in the lower section. The terms "aerobic" and "anaerobic" have relative meanings in comparison with each other. The sewage of different nature is circulated together, and admixed so as to produce a secondary sludge. In this way, the sewage is purified.

The formation of the secondary sludge is due to the coagulative tendency inherent to each bacteria of aerobic and anaerobic nature. In this respect, it has been found that when the sewage under the weak aeration is made to have a DO of 0,3 ppm or less and the sewage under the strong aeration is made to have a DO level which is at least 0,1 ppm higher than that of the sewage under the weak aeration, the most effective coagulative tendency is achieved in each sewage. However, if the DO of the sewage under the weak aeration exceeds 0,3 ppm and if the DO of the sewage under the strong aeration is made to have an increment of less than 0,1 ppm in comparison with the DO of the sewage under the weak aeration, an effective coagulative tendency is not achieved in either sewage. This leads to an insufficient purification of sewage. The aerobic bacteria activated under the strong aeration consist mainly of zoogloea, but can contain any other aerobic bacteria and yeast. The anaerobic bacteria activated under the weak aeration include obligate anaerobic bacteria, and facultative anaerobic bacteria such as lactobacillus, pediococcus, streptococcus, and bacillus. It has been found that when zoogloea is contained as an aerobic bacteria, the coagulability is considerably enhanced owing to the mucous membrance formed by it, thereby accelerating the formation of a coagulated mass into a secondary sludge. It has been additionally found that when facultative anaerobic bacteria are contained, an undesirable putrefaction of pollution content in the sewage is advantageously delayed, thereby minimizing the odour, and the resulting nuisance. Particularly, when lactobacillus is contained, the putrefaction is more delayed.

The bacteria mentioned above are naturally contained in the sewage to be treated, but can be added before the treatment is started, and/or during the treatment. When they are added, they are usually placed in the aeration tank 1 before starting the operation. In the later development of operation it is no longer necessary to add them, because the propagated bacteria are used.

When bacteria are added in the aeration tank 1, and admixed with the sewage present therein, in its upper section the aerobic bacteria alone are activated under the relatively strong aeration wherein the anaerobic bacteria a kept inactive or in a potentially active state, and in its lower section the anaerobic bacteria are activated under a relatively weak aeration wherein the aerobic bacteria are kept inactive or in a potentially active state. However, it is not necessary to take into consideration those inactive bacteria in carrying out the present invention, because they do not affect sewage purification.

The sludge rich in aerobic bacteria and that rich in anaerobic bacteria have mutually opposing physical and chemical properties, of which Coulomb force and Van der Waal's force increase the affinity between the two types of sludge, and create the high molecular bond therebetween. Moreover, the gluelike force provided by the mucous membranes formed by the aerobic bacteria facilitates to make the two types of sludge to thicken into a large sludgy mass. The desirable factors synergically work to produce the sludgy mass, whereby the waste water or sewage is purified. The secondary sludge is discharged from the tank 1 in the direction indicated by the arrow (B).

On the other hand, when the two sewages to be treated contain quite different pollution contents, it has been found that no coagulation occurs between the sludges activated in the above manner. This means that the coagulative action is not only due to Coulomb force and van der Waal's force but also due to high molecular bonding tendency.

- 10 -

0106043

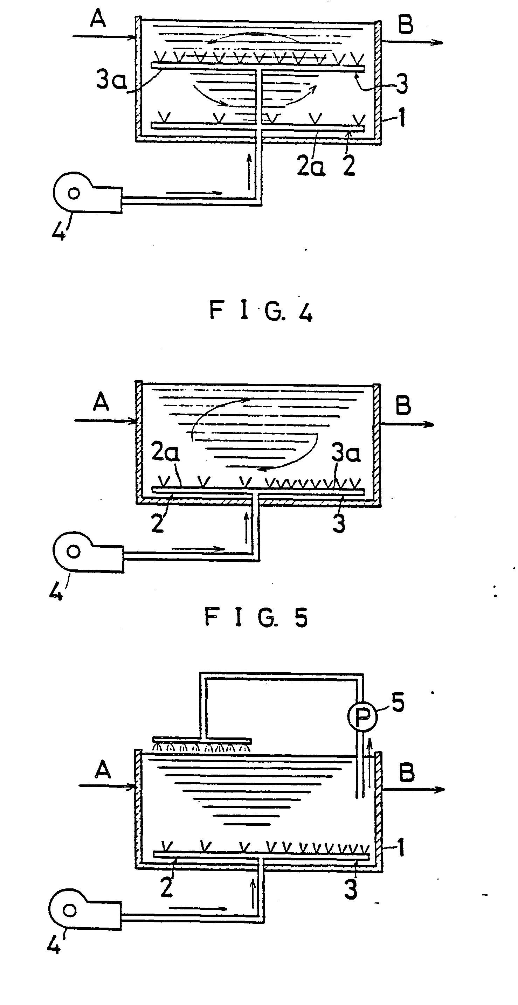

Fig. 4 shows a slightly modified embodiment, in which the left-hand section 2 is for the weak aeration and the right-hand section 3 is for the strong aeration. The basic function and effects of the tank 1 are quite the same as those of the embodiment illustrated in figure 3.

Fig. 5 shows a modification of the embodiment illustrated in fig. 4, which is featured by an arrangement which enables the sewage under the strong aeration to be sprayed onto the sewage treated under the weak aeration. The reference numeral 5 designates a pump whereby the sewage strongly aerated is pumped up to a spray pipe through which it is sprayed like a shower. The advantage of this embodiment is that when sprayed, the sewage is exposed to air, thereby securing a more condensed dissolved oxygen. As a result, the formation of a secondary sludge will be facilitated.

In the embodiments illustrated in figures 4 and 5, it is of course possible to reverse the positions of the sections 2 and 3. No change in the effects result.

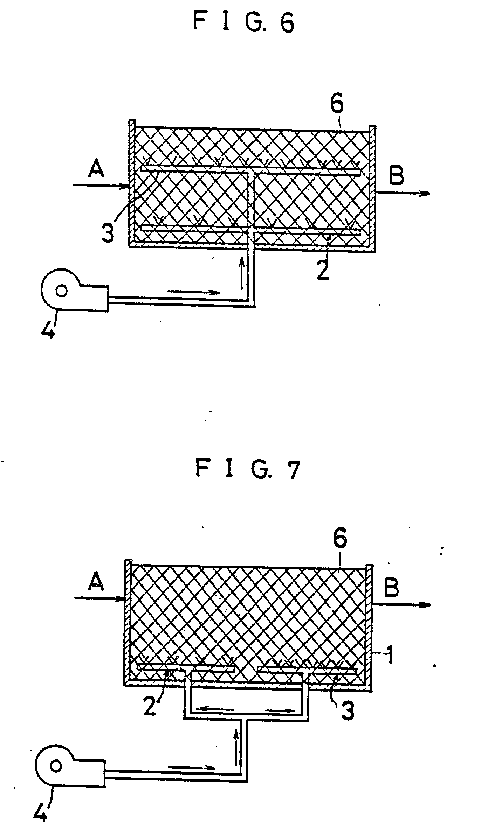

Each of the embodiments illustrated in figures 6 and 7 has a fixed floor 6 inside the tank 1, which floor is adapted to enable the aerated sludge to stick thereto. The aerobic sludge admixes with the anaerobic sludge deposite on the floor 6, and the anaerobic sludge comes into contact with the aerobic sludge sticking to the floor 6. In this way the two types of sludge is admixed to produce a seondary sludge.

In this case, it has been found that when the DO in the lower sewage is in the range of 0 to 0,1 ppm while the DO in the upper sewage is 0,3 ppm or more, or when the DO in the lower sewage is 0,2 ppm or less while the DO in the upper sewage is 0,5 ppm or more, the resulting aerobic sludge and anaerobic sludge have such a strong coagulative tendency toward each other that they readily thicken into a solid mass or a secondary sludge. In conclusion, when the DO in the lower sewage is 0,3 ppm or less and the DO in the upper sewage is kept at a higher value by 0,1 ppm or more, preferably 0,2 ppm or more than that of the lower sewage, the most effective coagulative tendency is achieved in each sewage.

In the embodiment illustrated in fig. 6 the aeration tank 1 has a stationary floor, but a movable-floor tank can be employed, wherein, however, it is preferred that a partition is vertically or horizontally provided so as to enable the two types of sludges to be well admixed with each other.

In the fixed-floor aeration tank 1 shown in fig. 6 the upper sewage and the lower sewage gradually circulate during which they are naturlly admixed to produce a sludgy mass. It is preferred that they are circulated at such a low speed as an hour or more each cycle. The circulation can be performed by means of a pump or any other mechanical means. However, the difference in aeration power between the upper and the lower sections naturally causes a circulation in the sewage stored in the tank to some extent.

According to fig. 7, the two differenct aeration sections 1 and 2 are arranged laterally of each other in a fixed-floor tank 1. This arrangement of the aeration devices which is similar to that shown in fig. 4, is particularly suited for causing circulation of the sewage due to the difference in aeration power in the two sections.

Fig., 8 to 12 show another example of the invention which is different from the above mentioned examples illustrated in fig. 3 to 5 in that there is provided a partition 7 for separating the inside space of the tank 1. The partition 7 is intended to prevent the sewage in one section from coming into contact with the sewage in another section at a normal condition, that is, without forcing one sewage to come into contact with another by a pump, the contact of two types of sewage will not happen. The reference numeral 8 designates a pump intended for such use. The partition 7 is provided with a number of apertures 7a allowing the sewage in both sections to communicate from one to another. In this way, the sewage in both sections is circulated through the partition 7, and admixed with each other during the circulation. Except for the provision of the partition 7, the effects and function of the tank 1 are the same as those of the embodiments described with reference to figures 3 and 7. The embodiments according to the second example are advantageous in that the partition 7 makes the two types of sewage come into contact with each other in an abrupt way, only through the apertures 7a. Without the partitions 7, the contact of the two types of sewage would occur everywhere in the tank 1 as long as the circulation continues therein.

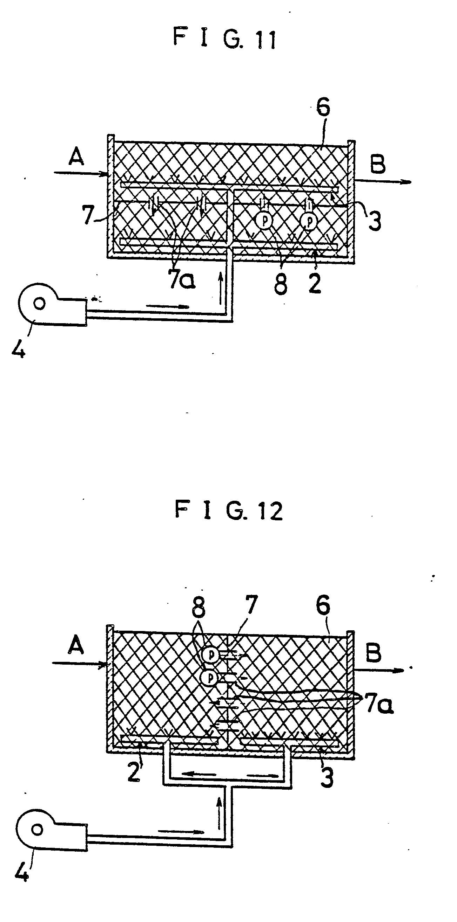

According to fig. 8, the partition 7 is horizontal and separates the lower and upper aeration sections 2 and 3, while, in fig. 9, the left-hand and right-hand aeration sections 2 and 3 are separated by a vertical partition. The embodiment shown in fig. 10 has as well a vertical partition 7 and is in other respects equivalent to the embodiment shown in fig. 15. The embodiments shown in fig. 11 and 12 correspond to those according to fig. 6 and 7 and are additionally provided with a horizontal or a vertical partition 7, respectively.

Fig. 13 shows an example of a modification of the embodiments illustrated in fig. 3 to 7, which are in common having no partitions. The tank 1 includes the weak areation device 2 near its bottom, whereby the average DO of the sewage is reduced to 0,3 ppm or less. Then the aerated sewage is pumped up by the pump 9 to the special tank 10 in which the sewage is in contact with air, the tank 10 thus forming the second aeration section. Finally, the sewage is sprayed through a spray pipe 11, thereby allowing the sewage to be admixed with that on the surface of the tank 1. In this case it is adjusted that the average DO of the sewage introduced into the special tank 10 may be kept at a level at least 0,1 ppm higher than that of the sewage in the tank 1.

When the tank 1 is provided with the strong aeration device 3, it sometimes happens that the expected aerobic sludge is insufficient in quantity. To make up for the insufficiency, it is preferred to add fibrin, saw dust or asbestos. In this case, it is essential prior to its use to equalize or at least approximate the surface potential of the substitute to that of the aerobic sludge.

Referring to fig. 14, an alternative embodiment will be described.

The illustrated system has two aeration tanks 1a and 1b, which are intended to aerate the sewage under different aeration conditions, that is under a strong air pressure and a weak air pressure. The air can be supplied from the same blower 2. Suppose that the strong aeration is carried out in the tank 1a, and that weak aeration is carried out in the tank 1b. In the tank 1a the aerobic bacteria present in the sewage are activated under the strong air gust, while in the tank 1b the anaerobic bacteria present in the sewage therein are activated. In this way an aerobic sludge and an anerobic sludge are produced, which are admixed in a mixing tank 12. Except the employment of two aeration tanks 1a,1b and the mixing taking place in a separate process, the basic principle is quite the same as that of the system illustrated in fig. 3 to 12. A coagulant can be added in the

- 14 -

0106043

mixing tank 12.

For better understanding the present invention will be explained by way of examples.

(1) Employing a fixed-floor aeration tank (fig. 6):
The sewage:  A waste water which was used to treat cuttlefish, 500 ton/day, the COD (Chemical Oxygen Demand) was 4000 ppm, and the BOD (Biological Oxygen Demand) was 4800 ppm (BOD = 1,2COD).

The following changes were observed during the circulation of the sewage in the tank:

COD 4000 ppm

sewage $\longrightarrow$ DO 0,1 ppm the lower section (anaerobic) $\longrightarrow$ about 4 hours' stay

DO 0,4 ppm $\longrightarrow$ the upper section (aerobic) $\longrightarrow$ COD 1500 ppm the lower about 4 hours' stay about

section (anaerobic) $\longrightarrow$ the upper section (aerobic) 4 hours' stay about 4 hours' stay

COD 100 ppm or less $\longrightarrow$ discharge

The calculation of the amount of air from the blower:

The amount of air required for treating BOD 1 kg is supposed to be 50 m³/BOD kg:

The aeration in the upper section = 500 ton/day x 1,8 BOD kg x 50 m³ ÷ 60 min = 31,25 m³/min
The aeration in the lower section = 500 ton/day x 4,8 BOD kg x 50 m³ ÷ 24 hours ÷ 60 min x $\frac{1}{10}$ = 8,3 m³/min The amount of air in the upper section + that in the lower section = 39,55 m³/min

The amount of air under the conventional activated-sludge methods:

The aeration = 500 ton/day x 4,8 BOD kg x 50 m³ ÷ 24 hours ÷ 60 min = 83,3 m³/min

As evident from the comparison between the two calulations, the amount of air required under the embodiment illustrated in fig. 6 was a half or less as little as that under the conventional activated-sludge method. Accordingly, the consumption of electric power can be less in blowing air pressure, which reduces the electrical expense. As referred to above, there is no need for preparing a diluting water, which eliminates the necessity of providing the equipment for dealing with it. All this reflects on the cost, and makes sewage disposal accessible to the companies and local governments.

(2) Employing two aeration tanks (fig. 14):

The sewage: For the tank 1a, a sludge which was obtained through the biological aerobic treatment of a waste water from the process of mackerel and sardine, the COD was 100 ppm, 10 ton/day.
For the tank 1b, a waste water obtained from the same process of mackerel and sardine, of which, however, methane was removed. The COD was 12 000 ppm, and the BOD was 6000 ppm, 10 ton/day.

The calculation of the amount of air from the blower:

The amount of air required for treating BOD 1 kg is supposed to be 50 m³/BOD kg:

The aeration in one of the tanks (DO: 0,4 ppm) =
10 ton/day x 0,12 BOD kg x 50 m³ ÷ 24 hours ÷ 60 min =
0,042 m³/min
The aeration in the other tank (DO: 0,15 ppm) =
10 ton/day x 6,0 BOD kg x 50 m³ ÷ 24 hours ÷ 60 min x
$\frac{1}{10}$ = 0,2 m³/min

Total aeration = 0,042 m³/min + 0,2 m³/min = 0,0242 m³/min

At the outlet of the mixing tank 12 a coagulant containing ferric chloride of 1500 ppm and a solution of 7,5% aluminum sulfate of 500 ppm was added. The treated water discharged from the mixing tank was dehydrated. The COD of the dehydrated waste water was 350 ppm.

The amount of air required under the conventional activated-sludge methods:

The aeration = (10 ton/day x 0,12 BOD kg + 10 ton/day x 6,0 BOD kg) x 50m³ ÷ 24 hours ÷ 60 min = 2,1 m³/min

This calculation discloses that the aeration under the embodiment illustrated in fig. 14, employing two aeration tanks, is nearly one tenth as little as that under the conventional activated-sludge methods.

As a result, the consumption of electric power can be considerably reduced in blowing air pressure. This of course leads to the economy of sewage disposal. Moreover, even if the COD of sewage to be treated exceeds 12000 ppm, sewage disposal can be carried out under the method of the invention without preparing a diluting water like the conventional activated-sludge method, under which the sewage would have to be diluted 10 to 20 times with the use of a great deal of water. The handling of a diluting water will call for various subordinate equipment, which

0106043

makes sewage disposal expensive and inaccessible to
manufacturerers and local governments.

- 18 -

0106043

## CLAIMS

1. Process for biologically treating a sewage, c h a r a c t e r i z e d  by the following steps: aerating a first portion of the incoming sewage under a relatively strong aeration condition, thereby producing a relatively aerobic sludge in the first portion of the sewage,

aerating a second portion of the sewage under a relatively weak aeration condition, thereby producing a relatively anaerobic sludge in said second portion thereof, and

admixing said first portion and said second portion of the sewage, thereby producing a secondary sludge for collection or removal.

2. Process as set forth in claim 1, c h a r a c t e - r i z e d  in that said second portion of the sewage is aerated to have a 0,3 ppm or less dissolved oxygen while said first portion of the sewage is aerated to have a higher concentration of dissolved oxygen by 0,1 ppm or more than that of said second portion thereof.

3. Process as set forth in claim 1 or 2, c h a r a c - t e r i z e d  in that said aeration of different nature is carried out in a single aeration tank, wherein said relatively strong aeration is carried out in one section thereof and wherein said relatively weak aeration is carried out in another section thereof.

4. Process as set forth in claims or 2, c h a r a c - t e r i z e d  in that said aeration of different natures carried out in separate aeration tanks.

5. Process as set forth in one of claims 1 to 4, c h a r a c t e r i z e d  in that said relatively aerobic sludge contains bacteria containing at least zoogloea.

6.  Process as set forth in one of claims 1 to 5, c h a r a c t e r i z e d in that said relatively unaerobic sludge contains unaerobic bacterial which consist mainly of facultative anaerobic bacteria.

7.  Process as set forth in claim 6, wherein said facultative anaerobic bacteria contains at least lactobacillus.

8.  Aeration tank system for carrying out the process as set forth in the preceding claims, c h a r a c t e - r i z e d by a tank (1) having a first aeration section (3) in which a relatively strong aeration is carried out, a second aeration section (2) in which a relatively weak aeration is carried out and means (8) for circulating said sewage in one section and said sewage in another section in a mixed state, thereby producing a secondary sludge for collection or removal.

9.  Aeration tank system as set forth in claim 8, further comprising a fixed floor (6) located in said aeration tank (1).

10. Aeration tank system as set forth in claim 8 or 9, wherein said first aeration section (3) and said second aeration section (2) are located in an upper and lower section of said tank, or vice versa, respectively.

11. Aeration tank system as set forth in claim 8 or 9, wherein said first aeration section (3) and said second aeration section (2) are located side by side in said tank (1).

12. Aeration tank system as set forth in one of claims 8 to 11, c h a r a c t e r i z e d by a partition (7) provided between said first aeration section (3) and said second aeration section (2), said partition including

0106043

a passageway (7a) allowing said sewage in both aeration sections to communicate with each other, and means (8) for circulating said sewage in one section and said sewage in another section in a mixed state, thereby producing a secondary sludge for collection or removal.

13. Aeration tank system as set forth in claims 8 or 9, c h a r a c t e r i z e d  by two separate tanks (1a,1b) for providing said first aeration section and said second aeration section, both of the tanks (1a,1b) being connected with a mixing tank for producing a secondary sludge for collection or removal.

0106043

$\frac{1}{7}$

F I G. 1-PRIOR ART

F I G. 2-PRIOR ART

FIG. 3    2/7    0106043

FIG. 4

FIG. 5

F I G. 6

F I G. 7

0106043

## F I G. 8

## F I G. 9

## F I G. 10

0106043

5/7

FIG. 11

FIG. 12

F I G. 13

**F I G. 14**